# EUROPEAN PATENT APPLICATION

(11) **EP 4 621 597 A1**
(43) Date of publication of application: **24.09.2025**
(21) Application number: 24165669.3
(22) Date of filing: 22.03.2024
(51) Int. Cl.: G06F 16/55, G06N 3/00

(54) **METHOD FOR TRAINING A BACKBONE NEURAL NETWORK, SYSTEMS, AND COMPUTER PROGRAM PRODUCT**

(71) Applicant: Siemens Healthineers AG, 91301 Forchheim (DE)
(72) Inventor: FARHAND, Sepehr, Chester, PA 19355 (US); SHINAGAWA, Yoshihisa, Downingtown, PA 19335 (US); HERMOSILLO VALADEZ, Gerardo, West Chester, PA 19382 (US)
(74) Representative: HKW Intellectual Property PartG mbB

(57) **Abstract**

A method for training a first backbone neural network (V), comprising: training (S400) the first backbone neural network (V) using a first medical data set (MIS-1) using self-supervised learning, the first medical data set (MIS-1) having a first modality; training (S402) a first downstream neural network (N1) comprising: applying (S402-2) the trained first backbone neural network (N1) to a second medical data set (MIS-2) to provide a first feature vector (FV), the second medical data set (MIS-2) having the first modality; training (S402-4) the first downstream neural network (N1) with the first feature vector (FV) as input data and labels (LA1) associated with the second medical data set (MIS-1); and updating (S404) the trained first backbone neural network (V) based on a supervised training signal (TS1) generated during the training of the first downstream neural network (N1).

A trained backbone neural network is provided by, in a first step, applying self-supervised learning and, in a second step, using supervised learning to update (finetune) the (partially) trained backbone neural network. Thereby, the required amount of training data is reduced.

## Description

Independent of the grammatical term usage, individuals with male, female or other gender identities are included within the term.

The present invention relates to the training of a backbone neural network in the medical domain, and further to systems and a computer program product. In particular, embodiments of the invention concern the field of federated learning, with the aim of providing a foundation model.

Advances in medical imaging, e.g., employing computed tomography or magnetic resonance systems, allow for high resolution imagery and thus the detection of tiniest changes in the anatomy of a patient. Yet, the procedure of radiologists visually analyzing radiology images is often challenging. For instance, the density and tissue type of organs are highly varied and in turn present a high variety of visual features. Additionally, background visual patterns can obscure the early signs of malignancies which may then be easily overlooked by the human eye. Therefore, the manual classification of the spatial distribution of abnormalities or patterns inevitably leads to errors owing to mistakes, human error, and/or details too fine for the human eye to detect. What is more, the reliable detection of abnormalities and/or features in medical images often requires highly experienced physicians further increasing their workload. Moreover, the human component in evaluating image data adds a degree of subjectivity which is often unwanted.

To cope with this situation, computer-aided detection (CADe) and computer-aided diagnosis (CADx) systems are being developed. Hereafter both types of systems will be referred to as CAD systems. CAD systems are technologies to help radiologists interpret medical images. A common use of CAD systems is to automatically identify suspicious regions in a medical image. Such suspicious regions may contain image patterns indicative of abnormalities which may comprise cancerous growths, masses, abscesses, lacerations, calcifications, lesions and/or other irregularities within biological tissue and which can cause serious medical situations if left undetected.

Machine learning algorithms have proven highly effective in the automated detection of medical findings. One issue is that such algorithms have to be trained on a sufficient amount of training data of sufficient quality to work properly during inference. Labeled training data often used for this purpose is particularly precious since it relies on expert annotations. That is, a human expert has to annotate medical findings in medical data sets manually. This is a tedious task especially if huge numbers of training data sets are required for training complex detection algorithms.

However, recent advancements in the field of self-supervised learning (SSL) suggest that training large models (images, language, etc.) on a vast amount of unlabeled data can result in foundation models (FM) with a high level of generalizability and thus rich internal representation power that can effortlessly adapt to novel downstream tasks. While these foundation models such as ChatGPT, LLaMA, Llama 2, and Mistral benefitted from the abundance of publicly available data, creating a medical domain foundation model is not as straightforward. The reason is that there is not enough publicly available medical domain data (images, radiology reports, etc.) with permissible license available. Furthermore, each healthcare organization may not have enough variability in its patient population to train its own foundation model.

It is one object of the present invention to provide methods, systems, and a computer program product capable of facilitating a more efficient usage of medical data.

This object is solved by the subject matter of the independent claims. Alternative and/or preferred embodiments are the subject of the dependent claims.

According to a first aspect, there is provided a method for training a first backbone neural network, comprising:
training the first backbone neural network using a first medical data set using self-supervised learning, the first medical data set having a first modality;
training a first downstream neural network comprising:
   applying the trained first backbone neural network to a second medical data set to provide a first feature vector, the second medical data set having the first modality;
   training the first downstream neural network with the first feature vector as input data and labels associated with the second medical data set; and
updating the trained first backbone neural network based on a supervised training signal generated during the training of the first downstream neural network.

One idea of the present invention is to provide a trained backbone neural network by, in a first step, applying self-supervised learning and, in a second step, using supervised learning to update (finetune) the (partially) trained backbone neural network. Thereby, the required amount of training data is reduced. This addresses the issue that there is not enough publicly available medical domain data.

The method is carried out at least partially in the medical domain, e.g., within one or more healthcare organizations (including healthcare providers such as clinics).

A "neural network" herein refers to an artificial neural network which is built up like a biological neural net, e.g., a human brain. In particular, an artificial neural network comprises an input layer and an output layer. It may further comprise a plurality of layers between the input and output layer. Each layer comprises at least one, preferably a plurality of nodes. Each node may be understood as a biological processing unit, e.g., a neuron. In other words, each neuron corresponds to an operation applied to input data. Nodes of one layer may be interconnected by edges or connections to nodes of other layers, in particular, by directed edges or connections. These edges or connections define the data flow between the nodes of the network. In particular, the edges or connections are equipped with a parameter, wherein the parameter is often denoted as "weight". This parameter can regulate the importance of the output of a first node to the input of a second node, wherein the first node and the second node are connected by an edge.

Neural networks can be trained. "Self-supervised" learning (SSL) is a paradigm in machine learning where a model is trained on a task using the data itself to generate supervisory signals, rather than relying on external labels provided by humans. In the context of neural networks, self-supervised learning aims to leverage inherent structures or relationships within the input data to create meaningful training signals. SSL tasks are designed so that solving it requires capturing essential features or relationships in the data. The input data is typically augmented or transformed in a way that creates pairs of related samples. One sample serves as the input, and the other is used to formulate the supervisory signal. This augmentation can involve introducing noise, cropping, rotation, or other transformations. "Supervised" learning of a neural network is based on known pairs of input and output values, wherein the known input values are used as inputs of the neural network, and wherein the corresponding output value of the neural network is compared to the corresponding known output value. The artificial neural network independently learns and adapts the weights for the individual nodes until the output values of the last network layer sufficiently correspond to the known output values according to the training data. For convolutional neural networks, this technique is also called "deep learning".

A backbone neural network is commonly used in object detection model architectures. The backbone neural network is responsible for extracting and encoding features from the input data. It acts as the core feature extractor, capturing low-level and high-level features from the input data.

The backbone neural network may be applied to extract features from data items comprised in the medical data sets, in particular, from respective image data, text data and/or longitudinal data. Image data may, for instance, be given in the form of the gray scale and/or color values of each slice/image. The thus extracted features like, contrast, gradients, texture, density, distortion, singularities, patterns, landmarks, masks or the like may form an image descriptor (also referred to as a "feature vector" herein) of the respective image/slice. The image descriptors may be fed as input values to a downstream neural network which serve to determine a degree of similarity between two slices or a slice and a key image based on the extracted features.

The method of the first aspect is a computer-implemented method.

The use of "first", "second"... "ninth" element (e.g., backbone neural network, medical data set, downstream neural network, feature vector, etc.) herein merely serves as a means to refer to the various elements. The "first", "second"... "ninth" element may be the same or different elements, except where there is an indication to the contrary. Also, it is permissible to change these references: e.g., the "third" may be changed to the "second", etc. Also, the presence of a "first" element does not require a "second" element to be present. Even more, the presence of a "first" element and a "third" element does not require a "second" element to be present.

Where it says "based on" herein, it can also be phrased "depending on" or "as a function of".

According to an embodiment of the first aspect, the method further includes training a second downstream neural network, comprising:
applying the trained first backbone neural network to a third medical data set to provide a second feature vector, the third medical data set having the first modality;
training the second downstream neural network with the second feature vector as input data and labels associated with the third medical data set; and
updating the trained backbone neural network based on a supervised training signal generated during the training of the second downstream neural network.

Advantageously, the same backbone model is used in the training of two different downstream models (e.g., the first and the second downstream model), and also updated in that process, which is efficient.

According to an embodiment of the first aspect, the method further includes training a second backbone neural network, comprising:
training the second backbone neural network using a fourth medical data set using self-supervised learning, the second medical data set having a second modality;
training a third downstream neural network comprising:
   applying the trained second backbone neural network to a fifth medical data set to provide a third feature vector, the fifth medical data set having the second modality;
   training the third downstream neural network with the third feature vector as input data and labels associated with the fifth medical data set; and
updating the trained second backbone neural network based on a supervised training signal generated during the training of the third downstream neural network.

Thereby, backbone models of different modality can be trained which, when combined after training, allow for the analysis of multi-modal data.

According to an embodiment of the first aspect, wherein training the first and second backbone neural network comprises:
applying the trained first backbone neural network to a sixth medical data set to output a fourth feature vector;
applying the trained second backbone neural network to a seventh medical data set to output a fifth feature vector;
comparing the fourth and fifth feature vector to each other to provide a comparison result;
updating the first and second backbone neural network depending on the comparison result.

Advantageously, this approach allows for effective self-supervised learning, especially where the sixth and seventh (which may just as well be referred to as the "first" and "third", for example) medical data sets are associated with each other, for example via a same patient identifier, same time stamp, same medical finding(s), and/or same data element(s) further identifying or characterizing the medical finding(s).

According to an embodiment of the first aspect, wherein comparing the fourth and fifth feature vector comprises:
determining a difference between the fourth and fifth feature vector; and wherein further training the first and second backbone neural network comprises:
minimizing the difference.

Some of the loss functions which may be used to determine the difference are triplet loss, pseudo labeling with cross-entropy loss, and contrastive loss. "Contrastive loss" takes the output of the network for a positive example and calculates its distance to an example of the same class and contrasts that with the distance to negative examples.

According to an embodiment of the first aspect, the method further includes a federated learning step, comprising:
training a third backbone neural network using an eighth medical data set using self-supervised learning, the eighth medical data set having the first modality;
aggregating the trained first and third backbone neural network to form an aggregated backbone neural network; and
updating the trained first and/or third backbone neural network based on the aggregated backbone neural network.

Advantageously, node information is shared between the first and third (which may also be termed the "second", for example) backbone models, making the models more general.

According to an embodiment of the first aspect, the federated learning step further including prior to the step of aggregating the trained first and third backbone neural network:
training a fourth downstream neural network, comprising:
   applying the trained third backbone neural network to a ninth medical data set to provide a sixth feature vector, the ninth medical data set having the first modality;
   training the fourth downstream neural network with the sixth feature vector as input data and labels associated with the ninth medical data set; and
updating the trained third backbone neural network based on a supervised training signal generated during training of the fourth downstream neural network.

Thus, the third backbone neural network is trained in the same manner as the first backbone neural network, namely not only in a self-supervised manner but according to this embodiment also in a supervised manner (using also training data of the first modality). This provides effective results during the aggregation step.

According to an embodiment of the first aspect, the method further includes: determining whether a data item is allowed to be used in the step of aggregating the trained first and third backbone neural network.

Accordingly, data privacy may be ensured at every healthcare organization.

According to an embodiment of the first aspect, the trained first, second, third and/or fourth downstream neural network is configured to perform a downstream task outputting one or more labels, the downstream task preferably including at least one of the following: detection of findings, classification of findings, segmentation, e.g., of organs, finding prior image data, e.g., of the same patient, and trending analysis.

According to an embodiment of the first aspect, wherein:
the first, second, third and/or fourth downstream neural network is embodied as a convolutional neural network;
the trained first, second and/or third backbone neural network is based on an encoder and/or transformer model, in particular a natural language transformer model, and/or wherein the trained first, second and/or third backbone neural network is a foundation model.

A foundational neural network model is commonly a neural network model that is pretrained on a large amount of data, through which the model gains a broad understanding of its input domain. Utilized as a neural network backbone, as a whole or in part, it may provide strong feature recognition etc.

According to an embodiment of the first aspect, wherein:
the second modality is different from the first modality and/or wherein the first and second modality are images, text, audio or video;
wherein one or more of the first to ninth medical data sets includes at least one medical finding; and/or
the at least one medical finding relates to an image feature, a text feature, an audio feature or a video feature.

For example, the first modality is images and the second modality is one selected from text, audio and video.

According to a second aspect, there is provided a training system comprising:
a first training device having:
   a first training unit for training a first backbone neural network using a first medical data set using self-supervised learning, the first medical data set having a first modality;
   a second training unit for applying the trained backbone neural network to a second medical data set to provide a first feature vector, the second medical data set having the first modality, and further for training a first downstream neural network downstream of the first backbone neural network with the first feature vector as input data and labels associated with the second medical data set; and
   an update unit for updating the trained first backbone neural network based on a supervised training signal generated during training of its first downstream neural network;
a second training device having:
   a first training unit for training a second backbone neural network using a third medical data set using self-supervised learning, the third medical data set having the first modality;
      a second training unit for applying the trained second backbone neural network to a fourth medical data set to provide a second feature vector, the fourth medical data set having the first modality, and further for training a first downstream neural network downstream of the second backbone neural network with the second feature vector as input data and labels associated with the fourth medical data set; and
      an update unit for updating the trained second backbone neural network based on a supervised training signal generated during training of its first downstream neural network;
an aggregator device configured for aggregating the trained first and second backbone neural networks to form an aggregated backbone neural network, and further for updating the trained first and second backbone neural networks based on the aggregated backbone neural network.

According to a third aspect, there is provided a computer-implemented detection and/or diagnosis system, comprising:
a receiving unit configured to receive medical data, the medical data having a first modality;
a first storage unit storing a first backbone neural network, the first backbone neural network being trained as claimed in the method of the first aspect;
a first processing unit configured for determining a feature vector based on the first backbone neural network and the received medical data;
a second storage unit storing a first downstream neural network, the first downstream neural network being trained as claimed in the method of the first aspect; and
a second processing unit configured for determining a label based on the feature vector and the first downstream neural network; and
an output unit for outputting the determined label.

According to an embodiment of the third aspect, the system further comprises a controller configured for generating control signals to control a robot based on the output label.

The system may also include the robot.

According to a fourth aspect, the invention relates to a computer program product comprising machine readable instructions, that when executed by one or more processing units, cause the one or more processing units to perform the method of the first aspect.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features described with reference to the first aspect of the present invention apply mutatis mutandis to the further aspects of the present invention, and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows three healthcare organizations connected to an aggregation device in accordance with a federated learning approach according to an embodiment;
Fig. 2 shows a client-server architecture of a healthcare organization from Fig. 1 according to an embodiment;
Fig. 3 shows data structures and processes within two healthcare organizations from Fig. 1 according to an embodiment;
Fig. 4 shows various embodiments of training methods for neural networks illustrated in Fig. 3;
Fig. 5-7 are excerpts from Fig. 3 and illustrate the training methods of Fig. 4 in more detail;
Fig. 8 shows a training system according to an embodiment; and
Fig. 9 shows a data processing system according to an embodiment.

Like reference numerals are used to refer to like elements throughout. In the following description, for purpose of explanation, numerous specific details are set forth in order to provide a thorough understanding of one or more embodiments. It may be evident that such embodiments may be practiced without these specific details.

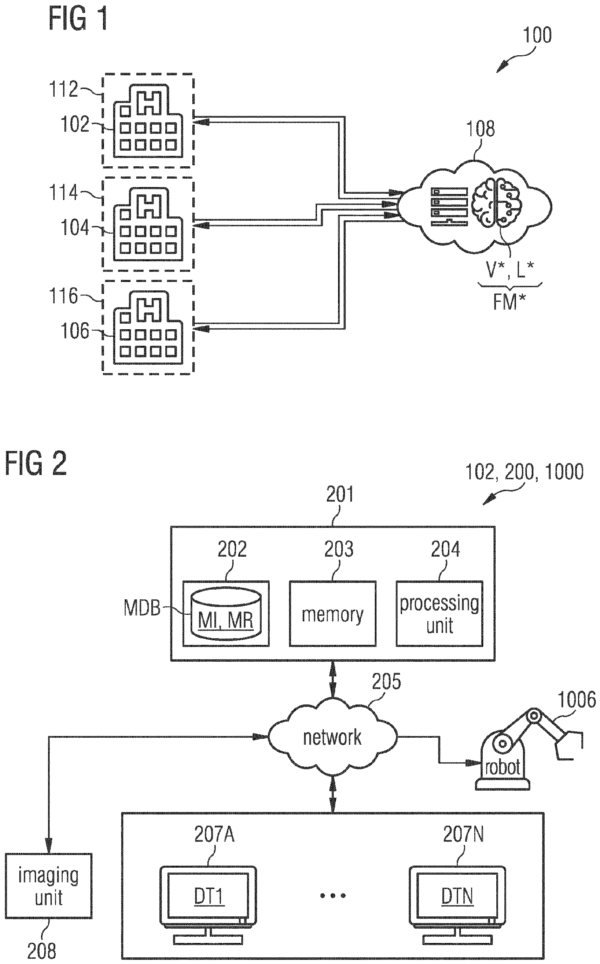

Fig. 1 shows schematically a system 100 in the medical domain. Reference numerals 102, 104, 106 designate different healthcare organizations, e.g., clinics.

The system 100 further preferably comprises an aggregator device 108 exchanging data with each healthcare organization 102, 104, 106 to implement federated learning as will be explained in more detailed hereinafter.

Fig. 2 provides an illustration of a block diagram of a client-server architecture 200 embodying the healthcare organization 102. The organizations 104, 106 may have the same or a similar setup. The client-server architecture 200 comprises a server 201 and a plurality of client devices 207A-N. Each of the client devices 207A-N is connected to the server 201 via a network 205, for example, a local area network (LAN), wide area network (WAN), WiFi, etc. In one embodiment, the server 201 is deployed in a cloud computing environment. As used herein, "cloud computing environment" refers to a processing environment comprising configurable computing physical and logical resources, for example, networks, servers, storage, applications, services, etc., and data distributed over the network 205, for example, the internet. The cloud computing environment provides on-demand network access to a shared pool of the configurable computing physical and logical resources.

The server 201 may include a storage unit 202 storing a medical database MDB that comprises medical images MI (including, e.g., volumetric/3D and/or 2D image data) and reports MR (reports or test results represented as text, but may also include audio and video, for example) related to a plurality of patients. The server 201 further includes a memory 203 and a processing unit 204. A server program loaded into the memory 203 is executed by the processing unit 204 to implement various server related tasks such as serving the client devices 207AN.

The client devices 207A-N are user devices, used by users, for example, medical personnel such as a radiologist, pathologist, physician, etc. to complete downstream tasks DT1-N. The downstream tasks DT1-N may include the detection of medical findings, classification of medical findings, segmentation, e.g., of organs, finding prior image data, e.g., of the same patient, and trending analysis. In an embodiment, the user device 207A-N may be used by the user to receive medical images MI associated with a patient and/or a medical report MR associated with a patient. Also, the medical image MI may be associated with a medical report MR, meaning that they have the same patient identifier, for example. The medical report MR may also be created at one of the client devices 207A-N and saved in the medical database MDB. The medical images MI and/or medical reports MR may be accessed by the user via a graphical user interface of an end user web application on the user device 207A-N, for example.

An imaging unit or scanner 208 may be connected to the server 201 through the network 205. The imaging unit 208 may be a medical imaging unit 208 capable of acquiring the medical images MI from a patient. The medical imaging unit 208 may be, for example, a scanner unit such as a magnetic resonance imaging unit, computed tomography imaging unit, an X-ray fluoroscopy imaging unit, an ultrasound imaging unit, etc.

Returning to Fig. 1, it is shown that each organization 102, 104, 106 has a firewall 112, 114, 116 (for example implemented as a data protection policy in the network 205 shown in Fig. 2) controlling the flow of data into and out of each organization 102, 104, 106. In particular, no data identifying an individual patient is passed from one organization to another. Thus, every organization 102, 104, 106 has to rely on its own medical images MI and medical reports MR or other medical data such as audio or video data associated with a patient when training CAD systems comprising neural networks. "Own" is to be understood as that data which is available within the respective firewall, in particular stored in the medical database MDB. The amount of unlabeled data is limited, the amount of labeled data even more so. For this reason, it is suggested that labeled and unlabeled data is used efficiently during training as now explained in more detail.

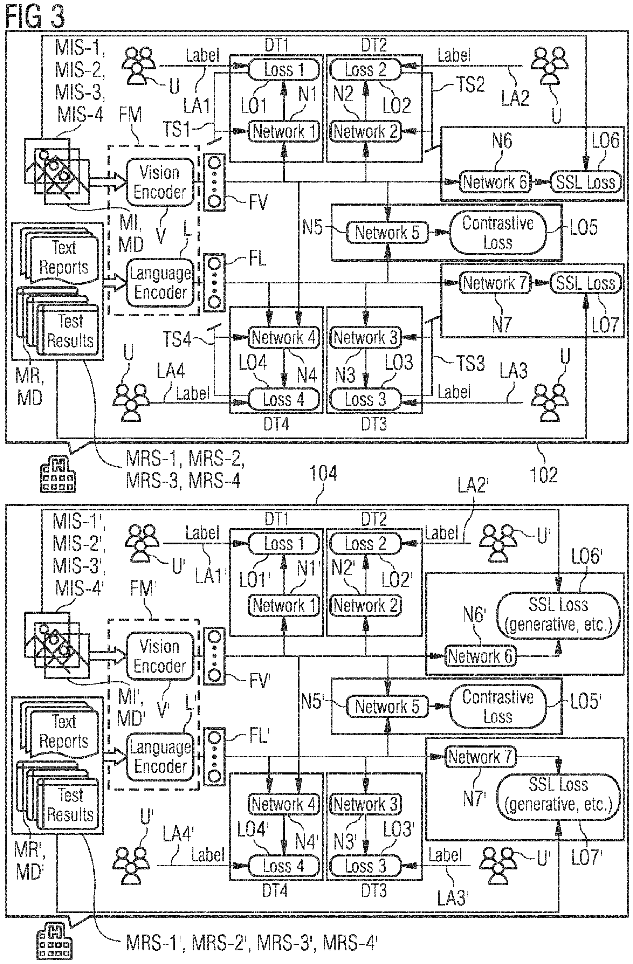

Fig. 3 illustrates data structures and processes used in the healthcare organizations 102, 104. While explanation hereinafter relate to the healthcare organization 102, the same are valid for the healthcare organization 104 (and 106). Corresponding elements in the healthcare organizations 102, 104 are designated with ʺ‴. It is only for illustrative reasons that the healthcare organizations 102, 104 have the same type and number of elements. Of course, the structures and processes used in the healthcare organizations 102, 104, 106 may differ in various aspects, such as number, type, order, etc.

The healthcare organization 102 comprises one, two or more backbone neural networks. In this example, two backbone neural networks V, L are provided.

The neural network V is preferably based on or implemented as an encoder to encode image data and is therefore referred to also as a vision encoder V herein. An "encoder" herein refers to a part of a network architecture that is responsible for transforming input data into a different representation or encoding. This encoding is often of lower dimensionality and is designed to capture important features or patterns in the input data. Examples are autoencoders, sequence-to-sequence models and BERT (Bidirectional Encoder Representations from Transformers)-encoders. The vision encoder V may be configured to function patchwise, i.e., is able to identify the exact portions of a medical image MI leading to a certain medical finding which may be described in a medical report MR in cases where medical images MI and associated medical reports MR are available, as explained below.

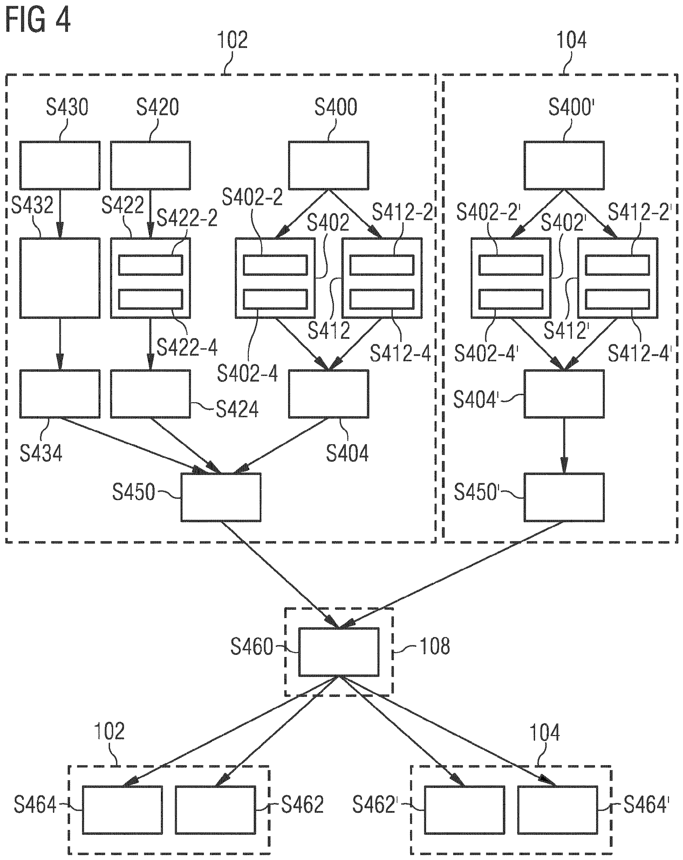

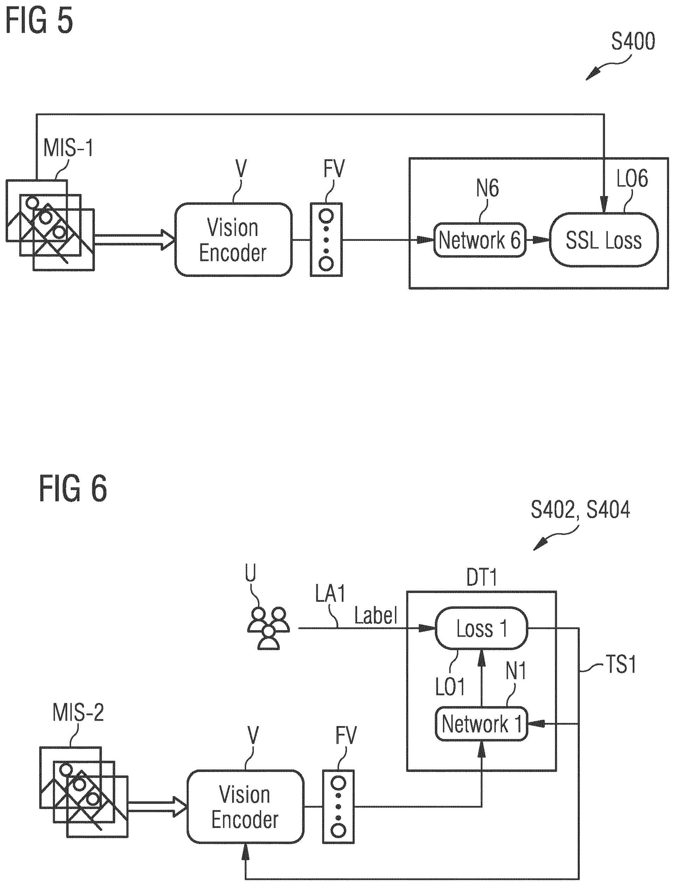

The (untrained or partially trained) image encoder V is trained in a step S400 shown in Fig. 4 and further illustrated in Fig. 5 using an image data set MIS-1 (also termed "first medical data set" herein) which is not labeled (unlabeled data). A "set" herein refers to a plurality of entities making up that set. A medical image data set herein is thus made up of multiple medical images MI. The medical images MI may include one or more medical findings. A "medical finding" is herein defined as clinical, laboratory or molecular evidence (or absence of evidence) of a disease. Examples of medical findings are tumors, masses, abscesses, lacerations, calcifications, lesions and/or other irregularities within biological tissue. Since the unlabeled medical image data set MIS-1 contains image data, it has a first modality. The image data set MIS-1 is unlabeled as the medical findings are not associated with corresponding data elements further identifying or characterizing the medical findings.

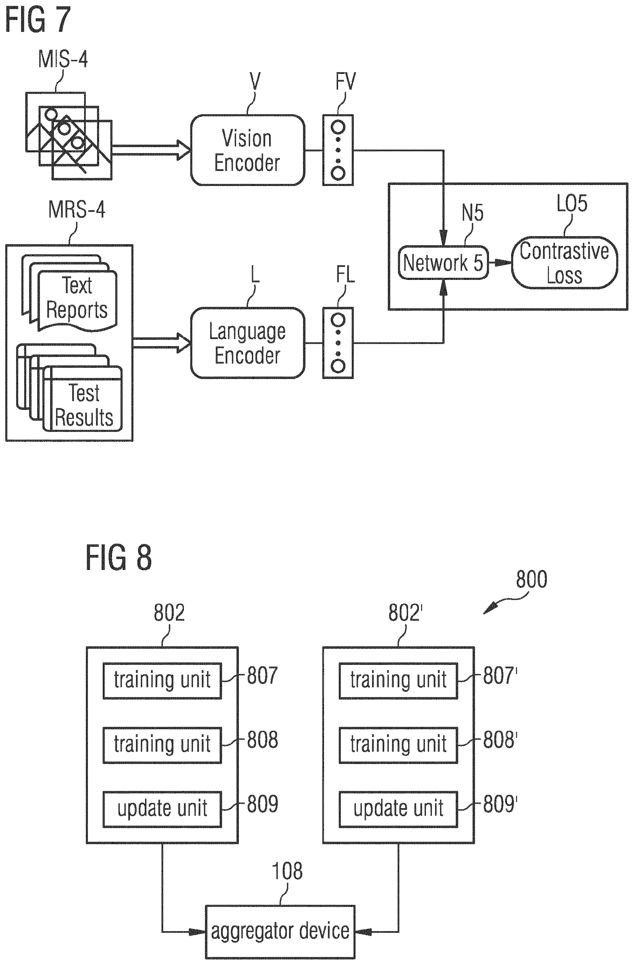

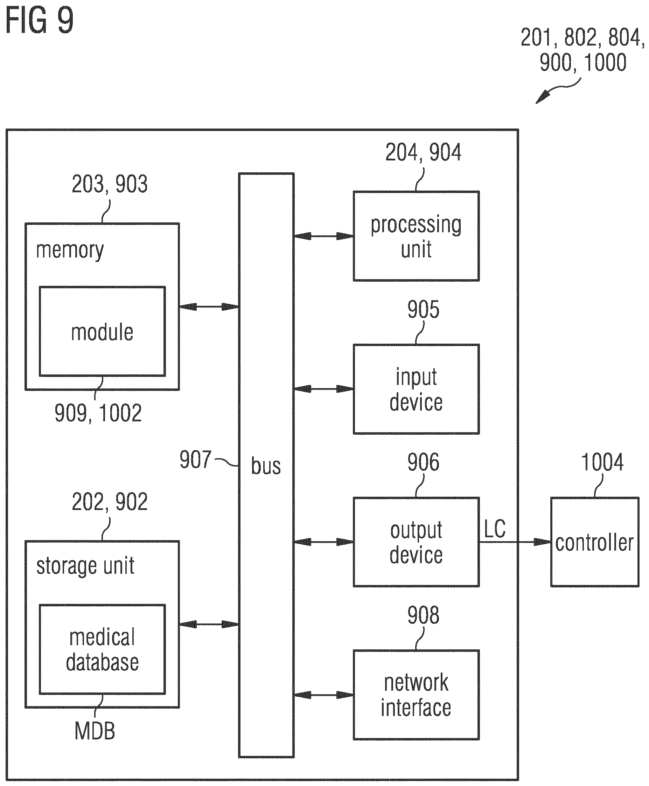

Fig. 8 shows a training system 800 performing the training as described herein. The training system 800 comprises two training devices 802 and 802' as well the aggregator device 108. The training devices 802, 802' as well as the aggregator device 108 may be implemented in hardware and/or software. For example, the training device 802 may be implemented within the healthcare organization 102 by using at least portions of the client-server architecture 200 (see Fig. 2). Similarly, the training device 802' may be implemented within the healthcare organization 104 by using at least portions of another client-server architecture. The aggregator device 108 may be implemented as a server or may be implemented in a decentralized manner. Even more generally, the training devices 802, 802' and the aggregator device 108 may, respectively, be configured as a data processing system 900 shown in Fig. 9 as will be elaborated later.

Further in Fig. 8, the training device 802 has a training unit 807 (also termed "first training unit" herein) training the vision encoder V using the unlabeled medical data set MIS-1 employing self-supervised learning (step S400). In this, the vision encoder V determines, as seen in Fig. 3 and 5, a first feature vector FV (encoding) based on the unlabeled medical data set MIS-1. A "feature vector" is generally understood as an n-dimensional vector of numerical features that describe some object in pattern recognition in machine learning. For example, the first feature vector FV represents a classification (e.g., a numerical representation of the input data in high dimensional space) of the medical data set MIS-1. A neural network N6 (a decoder) decodes the first feature vector FV and the decoded data set (not shown) is compared to the (original) unlabeled medical data set MIS-1 (also known as "masked signal modeling"). An SSL loss LOG (e.g., a reconstruction loss) is determined using an appropriate loss function. The weights and biases within the vision encoder V are adjusted during backpropagation in a way that minimizes SSL loss. Examples of loss functions are: a) Mean Squared Error between an original image and a reconstructed image (e.g. going from input image space to feature space (FV) and from feature space reconstructing input image), c.f. He, K, Chen, X., Xie, S., Li, Y., Dollár, P. and Girshick, R., 2022. Masked autoencoders are scalable vision learners. In Proceedings of the IEEE/CVF conference on computer vision and pattern recognition (pp. 16000-16009*),* or b) L2 distance of two similar image patch representations (FVs) in the feature space (e.g. from two difference crops of the same image), c.f. Assran, M., Duval, Q., Misra, L, Bojanowski, P., Vincent, P., Rabbat, M., LeCun, Y. and Ballas, N., 2023. Self-supervised learning from images with a joint-embedding predictive architecture. In Proceedings of the IEEE/CVF Conference on Computer Vision and Pattern Recognition (pp. 15619-15629*).*

The healthcare organization 102 further comprises one, two or more downstream neural networks, namely neural networks N1 and N2 (herein also termed "first downstream neural network" and "second downstream neural network") downstream of the vision encoder V. The neural networks N1, N2 are preferably implemented as convolutional neural networks (CNNs), respectively. Examples of suitable CNNs are U-Net or ResNet.

The (untrained or partially trained) neural network N1 is trained using supervised learning in a step S402 shown in Fig. 4 and further illustrated in Fig. 6 using an image data set MIS-2 (also termed "second medical data set" herein) which may be the same or different from the unlabeled image data set MIS-1. In any case, the image data set MIS-2 has the same modality as the image data set MIS-1, i.e., both sets comprising image data. Training step S402 is performed by a training unit 808 (also termed "second training unit" herein) of the first training device 802.

In sub-step S402-2, the (partially trained) vision encoder V determines a feature vector FV based on the image data set MIS-2. The feature vector FV is then used in sub-step S402-4 as input to the neural network N1. The neural network N1 performs a downstream task DT1 based on the first feature vector FV which can be generally described as outputting one or more labels. Labels may be discrete or categorical values, continuous numerical value or a vector of values, segmentation masks, etc. In particular, the downstream task DT1 may include detection of findings, classification of findings, segmentation, e.g., of organs, finding prior image data, e.g., of the same patient, and trending analysis.

For example, the "detection of findings" may involve determining a size and geometric location (label) of a medical finding in the medical image data set MIS-2.

"Classification" may output a single label for a specific pixel or voxel in the medical image data set MIS-2. The label may describe the type of organ ("liver", "kidney", etc.) or the medical finding ("tumor", "no tumor", etc.). More generally, "classification" in vision may assign a single or multiple discrete labels to an input image.

"Segmentation" differs from classification in that in segmentation the label is determined for every pixel or voxel in the medical image data set MIS-2.

"Finding prior image data" may involve determining another image that was taken at an earlier point in time than an image MI in the medical image data set MIS-2. In particular, this prior image may stem from the same patient or from a patient with a similar pathology. To this end, prior images are compared to one or more images MI in the medical image data set MIS-2 and it is determined whether there is a match (label).

Using "trending analysis" a growth of a medical finding can be tracked over time. This may, for example, involve automatically determining bounding boxes or other graphical measurements (labels) of medical findings.

The image data set MIS-2 may have been suitable selected to match the training of the specific downstream task DT1-N at hand. For example, when DT1 concerns classification, the image data set MIS-2 would contain medical images MI which contain the to be classified type of data. Also, when a new downstream task is added to the health organization 102, training data (image data sets) should be matched to the new downstream task.

In Fig. 3 and 6, a user U, e.g., a radiologist, provides a label LA1 based on his/her own determination of the downstream task DT1 at hand. This label LA1 is compared to the label determined by neural network N1 and a loss LO1 is determined using an appropriate loss function. For a classification task, the loss function may be cross-entropy loss, hinge loss, etc. The output of a downstream task might be a rational number (e.g. 0.8, 10, ...), or a vector of such values. In that case, a regression loss, e.g. Mean Squared Error (MSE) loss, Dice loss, etc. may be used.

Based on the loss function, a training signal TS1 is generated to adjust the weights and biases within the neural network N1 during backpropagation in a way that minimizes the loss LO1. In training of neural networks, this is known as backpropagation (backward propagation of errors). In backpropagation, the gradients of the loss function with respect to the weights of the network are calculated and used for adjusting the weights in a way that minimizes the loss. The training signal TS1 is the gradient of the loss. Other training signals described herein may be determined analogously.

The image data set MIS-2 may be initially unlabeled, i.e., when the vision encoder V is applied to that data set, and labels are added during step S402-4 by the users U. However, in one embodiment, the labels may be comprised in metadata associated with the image data set MIS-2, thus representing labelled data. The labels LA1 may have been added as metadata by users prior to step S402 or step S400. In this case, no user input is required during step 402-4, but the labels LA1 are extracted from the metadata.

The (partially) trained vision encoder V is updated (i.e., further trained) in step S404 (Fig. 4) based on the training signal TS1. This entails, for example, changing the weights and biases in the vision encoder V depending on the training signal TS1. The step of updating (S404) is performed by an update unit 809 of the training device 802.

The step of updating (S404) may also occur in parallel with step S402-4 (or step S412-4 below) of training the downstream neural network N1. In other words, the training signal TS1 is used to update (in particular to change the weights and biases of) the vision encoder V and the neural network N1 at the same time.

The neural network N2 may be trained in step S412 (Fig. 4), also in a supervised manner as described for step 402. Based on a medical image data set MIS-3 (also termed "third medical data set" herein) shown in Fig. 3, a second feature vector FV is determined by the image encoder V (step S412-2). The neural network N2 determines a label based on the second feature vector FV. This label is compared to a label LA2 provided by a user U and a loss LO2 is determined using an appropriate loss function. Based on the loss function, a training signal TS2 (Fig. 3) is generated to adjust the weights and biases within the neural network N2 during backpropagation in a way that minimizes loss LO2 (step S412-4). The training signal TS2 is also used to update the vision encoder V in step S404 as explained for the training signal TS1.

The medical image data set MIS-3 may be identical or different from the medical image data sets MIS-1 and MIS-2, but has the same modality (image data). The neural network N2 implements a downstream task DT2 which is selected, e.g., from the tasks detection of findings, classification of findings, segmentation, e.g., of organs, finding prior image data, e.g., of the same patient, and trending analysis, but is different (i.e., concerns another task) from the downstream task DT1.

The second backbone neural network L shown as part of the healthcare organization 102 is preferably based on or implemented as an encoder to encode text data and is therefore referred to also as a language encoder V herein. Alternatively, the second backbone neural network L could be implemented as a natural language transformer model.

The (untrained or partially trained) language encoder L is trained in a step S420 shown in Fig. 4 and in manner analogous to Fig. 5 using a text data set MRS-1 (also termed "fourth medical data set" herein) which is not labeled (unlabeled data). A text data set is made up of multiple medical reports MR. The medical reports MR may include one of more medical findings as defined above. The medical reports MR may describe, using text (or, in other embodiments, using audio, video, etc.), the finding in a patient as such (e.g., a lung tumor being present) and, optionally, further information characterizing the medical finding (e.g., the size of the tumor). The unlabeled medical reports MR have a second modality (text data) which is different from the first modality (image data).

The training device 802 (Fig. 8) may also be used to train the language encoder L using the unlabeled medical text data set MRS-1 employing self-supervised learning (step S420). In this, the language encoder L, as shown in Fig. 3, determines a third feature vector FL (encoding) based on the unlabeled text data set MRS-1. For example, the third feature vector FL represents a classification of the text data set MRS-1. In one embodiment, the third feature vector FL represents an extract of medical findings from the text data set MRS-1 and/or information extracted from the text data set MRS-1 characterizing those findings. A neural network N7 (a decoder) decodes the third feature vector FL and the decoded data set (not shown) is compared to the (original) unlabeled text data set MRS-1 (also known as "language modeling"). An SSL loss LO7 is determined using an appropriate loss function. SSL loss, in particular for a language modelling task, may be cross-entropy loss, negative log-likelihood loss, etc. The weights and biases within the language encoder L are adjusted during backpropagation in a way that minimizes SSL loss LO7.

The healthcare organization 102 further comprises one, two or more downstream neural networks, namely neural networks N3 and N4 (herein also termed "third downstream neural network" and "fourth downstream neural network") downstream of the language encoder L. The neural networks N3, N4 are preferably implemented as a natural language processing algorithm (e.g. attention-based architectures, multilayer perceptron, etc.), respectively.

The (untrained or partially trained) neural network N3 is trained using supervised learning in a step S422 shown in Fig. 4 and in a manner analogous to Fig. 6 using a text data set MRS-2 (also termed "fifth medical data set" herein) which may be the same or different from the unlabeled text data set MRS-1. In any case, the text data set MRS-2 has the same modality as the text data set MRS-1, i.e., both sets comprising text data.

In sub-step S422-2, the (partially trained) language encoder L determines a fourth feature vector FL based on the text data set MRS-2. The fourth feature vector FL is then used in sub-step S422-4 as input to the neural network N3. The neural network N3 performs a downstream task DT3 based on the fourth feature vector FL which can be generally described as outputting one or more labels. In particular, the downstream task DT3 (and DT4 below) may include predicting words or sentences in relation to a medical report MR, summarizing medical reports, or predicting additional medical findings and/or information characterizing medical findings. In particular, the downstream task DT3 (and DT4 below) may include detecting abnormalities such as "enhancing mass", "abnormal signal", etc., classification of findings such as "benign tumor", "malignant tumor", etc., or detecting recommendations such as "follow up in 6 months" etc.

A user U, e.g., a radiologist, provides a label L3 based on his/her own determination of the downstream task DT3 at hand. The label L3 is compared to the label determined by the network 3 and a loss LO3 is determined using an appropriate loss function. Based on the loss LO3, a training signal TS3 is generated to adjust the weights and biases within the neural network N3 during backpropagation in a way that minimizes the loss LO3.

The text data set MRS-2 may be initially unlabeled, i.e., when the language encoder L is applied to that data set, and labels are added during step S422-4 by a users U. However, in one embodiment, the labels may be comprised in metadata associated with the text data set MRS-2, thus representing labelled data. For example, the labels might be of categorical values, continuous values/vector of values, or a text that can be utilized in instruction fine-tuning. The labels L3 may have been added as metadata by users prior to step S422 or step S420. In this case, no user input is required during step 422-4, but the labels L3 are extracted from the metadata.

The (partially) trained language encoder L is updated (i.e., further trained) in step S424 (Fig. 4) based on the training signal TS3. This entails, for example, changing the weights and biases in the language encoder L depending on the training signal TS3.

The training of the downstream network DT4 is analogous to that of DT3 which is therefore not elaborated further.

Another method of training is illustrated in steps S430-S434 and Fig. 7. This method may be used in particular when there is an unlabeled image data set MIS-4 (also termed "sixth medical image set") and associated unlabeled text (or audio, video, etc.) data set MRS-4 (also termed "seventh medical image set") available. For example, the data sets MIS-4 and MRS-4 may include or relate to the same patient identifier. For instance, when a patient's organs are imaged using the scanner 208 one or more medical images MI are obtained. The images MI are saved using a specific patient identifier. Substantially at the same time, a radiologist prepares a medical report MR based on these medical images MI. The medical report MR is also saved using that same patient identifier. The medical images MI and medical report MR are thus linked (associated) in the present sense (which does not exclude other ways of association).

In step S430, a fifth feature vector FV is determined by the vision encoder V based on the unlabeled image data set MIS-4 using self-supervised learning. Also, a sixth feature vector FL is determined by the language encoder L based on the unlabeled text data set MRS-4.

In step S432, the fifth and sixth feature vectors FV and FL are compared (in particular, a difference between the vectors is obtained) using a neural network N5, and a loss LO5 is determined. Here, the difference is determined using contrastive loss, for example.

In step S434, the weights and biases of the vision encoder V as well as of the language encoder L are updated so as to minimize the determined loss.

One or more of the methods S400-404, S420-424 and S430-S434 may be employed also within the healthcare organization 104. Fig. 4 shows as an example, a method S400'-404' used in the healthcare organization 104.

Now, the federated learning approach already mentioned in connection with Fig. 1 will be described in more detail.

For example, the vision encoder V (Fig. 3) of the healthcare organization 102 is trained and updated in steps S400 and S404 based on medical image data sets MIS-1 and 2 containing (personal) data which may not pass the firewall 112 (Fig. 1). Similarly, the vision encoder V' of the healthcare organization 104 gets trained and updated in steps S400' and S404' based on medical image data sets MIS-1' (also termed "eighth medical data set" herein) and MIS-2' (also termed "ninth medical data set" herein) containing (personal) data which may not pass the firewall 114 (Fig. 2).

To this end, there is a step S450, S450' provided wherein only allowed data items are passed from each healthcare organization 102, 104 to the aggregator device 108. These allowed data items preferably include some or all of the weights and biases (or other node parameters) of the vision encoders V, V'. The decision of whether or not a data item is an allowed item can be taken at various levels. For example at the system design level, only data items stored in specific locations (predefined memory) or being of a specific nature (weights, biases, etc.) may be read and passed on to the aggregator device 108. According to another embodiment, there is a routine executed at step S450, 450' which checks whether or not a data item fulfills certain criteria (i.e., does not contain private information) and then allows it to pass to the aggregator device 108 or not. The steps S450, S450' may be executed by each training device 802, 802' separately.

At step S460, the aggregator device 108 aggregates the vision encoders V, V' (local models) to form an aggregated vision encoder V*. During this step, node parameters (e.g., weights or biases) of the vision encoders V, V' are combined to form a new global model.

In steps S462, S462', the vision encoders V, V' are updated separately based on the aggregated vision encoder V*. In particular, node parameters (e.g., weights or biases) of the vision encoders V, V' are updated based on node parameters (e.g., weights or biases) of the aggregated vision encoder V*.

By the same token, there may be provided an aggregated language encoder L* (global model) based on the language encoders L, L' (local models) at the healthcare organizations 102, 104 which is then used to update the language encoders L, L' in a step S464, S464'.

Vision encoders V, V' and language encoders L, L' benefiting from self-supervised and supervised learning and, preferably, also from federated learning as described above, combine to form a multi-modal foundation model FM, FM' (local) - see Fig. 3 - or FM* (global) - see Fig. 1. A "foundation model" refers to an AI model that is trained on broad data, uses self-supervision, contains at least tens of billions of parameters, and is applicable across a wide range of contexts. The foundation models FM, FM' enable the execution of downstream tasks DT1-DT4 of uni-modal or mulit-modal nature.

For example, the inventors found in a case study, dealing with lung nodule detection in 3D Chest CT images, that given the limited amount of labeled data, it was not possible to train a lung nodule detection system that would yield acceptable results. The detection system was based on DETR architecture. DETR (Detection Transformer) is a deep learning model for object detection. To overcome this limitation, the inventors first pretrained the backbone neural network of DETR (vision encoder V and neural network N6 in Fig. 3) with self-supervision loss, and then finetuned the pretrained network (vision encoder V in Fig. 3) and the task specific network (neural network N1 in Fig. 3) on manually labeled data - as described above. The thus obtained DETR architecture provided efficient nodule detection in 3D Chest CT images.

In one embodiment, the vision encoders V, V' and/or language encoders L, L' used at the healthcare organization 102, 104 could be (or be based on) foundation models right from the start (i.e., before any of steps S400, S400', S420, S430). This may significantly reduce training time.

Fig. 9 is a block diagram of a data processing system 900. It is appreciated that the server 201, the clients 207A-N and/or any other portion of the client-server architecture 200 as well as the training system 800 may be an exemplary implementation of the system 900 of Fig. 9.

The data processing system 900 comprises a processing unit 904, memory 903, a storage unit 902, an input unit 905, an output unit 906, a bus 907, and a network interface 908.

The processing unit 904, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 904 may also include embedded controllers, such as generic or programmable logic devices or arrays, application specific integrated circuits, single-chip computers, and the like. In one embodiment, the processing unit 904 determines or calculates the feature vector FV, the SSL loss LO1-7 as well as adjusts the weights and biases within the vision encoder V using gradient descent during backpropagation.

The memory 903 may be volatile memory and non-volatile memory. The memory 903 may be coupled for communication with said processing unit 904. The processing unit 904 may execute instructions and/or code stored in the memory 903. A variety of computer-readable storage media may be stored in and accessed on said memory 903. The memory 903 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 903 comprises a computer program or module 909 stored in the form of machine-readable instructions on any of said above-mentioned storage media and may be executed by the processing unit 904. When executed by the processing unit 904, the module 909 causes the processing unit 904 to perform the training steps as described for the training system 800. For example, the vision encoder V may be (at least partially) loaded into the memory 903 during training.

The storage unit 902 may be a non-transitory storage medium which stores the medical database MDB, for example. The input unit 905 may include input means such as keypad, touch-sensitive display, camera (such as a camera receiving gesture-based inputs), a port etc. capable of providing an input signal such as a mouse input signal or a camera input signal. The bus 907 acts as interconnect between the processing unit 904, the memory 903, the storage unit 902, the input unit 905, the output unit 906 and the network interface 908. The medical image data MI and the medical reports MR may be read into the medical database MDB via the network interface 908 or the input unit 905, for example. Additionally or alternatively, the storage unit 902 may store the vision encoder V prior to training, or after training. In another embodiment, the vision encoder V is received via the input unit 905 or the network interface 908 from the aggregator device 108, for example.

Those of ordinary skilled in the art will appreciate that said hardware depicted in Fig. 9 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition or in place of the hardware depicted. Said depicted example is provided for the purpose of explanation only and is not meant to imply architectural limitations with respect to the present disclosure.

A data processing system 900 in accordance with an embodiment of the present disclosure may comprise an operating system employing a graphical user interface (GUI). Said operating system permits multiple display windows to be presented in the graphical user interface simultaneously with each display window providing an interface to a different application or to a different instance of the same application. A cursor in said graphical user interface may be manipulated by a user through a pointing device. The position of the cursor may be changed and/or an event such as clicking a mouse button, generated to actuate a desired response. One of various commercial operating systems, such as a version of Microsoft Windows^{™}, a product of Microsoft Corporation located in Redmond, Washington, may be employed if suitably modified.

The client-server architecture 200 or the data processing system 900 may also implement a CAD system 1000 (Fig. 9) to apply the trained vision encoder V, language encoder L and/or one or more of the trained neural networks N1-4 to medical data MD, and generate output data (labels) based thereon. To this end, a CAD module 1002 (Fig. 9) is executed by the processing unit 204, 904.

For example, the medical data MD may be received by the input unit 905 or network interface 908 (also termed "receiving unit") connected to the network 205. The medical data MD may have one or more modalities, i.e., it may include image, text, audio or video data, also in combination. In particular, the medical data MD comprises a medical image MI scanned with the imaging unit 208. Alternatively, the medical data MD comprises a medical report MR entered at one of the client devices 207A-N, or both (a medical image MI and a medical report MR).

Via the input unit 905, for example a mouse, the user U, e.g., a radiologist, selects a suitable downstream task DT1-4, e.g., classification, at one of the client devices 207A-N.

The trained vision encoder V, language encoder L and one or more of the trained neural networks N1-4 are stored in the storage unit 202 or in the network 205 ("first storing unit" and "second storing unit"). The trained neural network N1-4 corresponding to the selected downstream task DT1-4 and the associated trained vision and/or language encoder V, L (or parts thereof) is loaded into memory 203.

In the case of the downstream task being classification, the processing unit 904 (also termed "first processing unit" and "second processing unit" herein) may determine a feature vector FV based on the trained vision encoder V and the input medical data MD (containing a medical image MI, for example). The feature vector FV is further processed by the corresponding trained neural network N1-4 which then outputs, as seen in Fig. 9, the label(s) LC (classification) by the output unit 906 or via the network interface 908.

In an embodiment, the CAD system 1000 further comprises a controller 1004 (Fig. 9) as well as a robot 1006 (Fig. 2). The robot 1006 may be any automated system. For example, the robot 1006 can be a drive system to control, before or while taking the image MI using the imaging unit 208, the patient's and/or the scanner's position. In another example, the robot 1006 is a surgical robot. The robot 1006 is connected directly or via the network 205 to the controller 1004. The controller 1004 is configured to generate control signals to control the robot 1006 base on the output label(s) LC to, for example, change the patient's or the scanner's position.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein, rather, the invention extends to all functionally equivalent structures, methods and uses, such as are within the scope of the appended claims. Those skilled in the art, having the benefit of the teachings of this specification, may effect numerous modifications thereto and changes may be made without departing from the scope and spirit of the invention in its aspects.

### REFERENCE NUMERALS

- 100: system
- 102: healthcare organization
- 104: healthcare organization
- 106: healthcare organization
- 108: aggregator device
- 112: firewall
- 114: firewall
- 116: firewall
- 200: client-server architecture
- 201: server
- 202: storage unit
- 203: memory
- 204: processing unit
- 205: network
- 207A-N: client devices
- 208: imaging unit
- 800: training system
- 802: training device
- 802': training device
- 807: training unit
- 808: training unit
- 809: training unit
- 900: data processing system
- 902: storage unit
- 903: memory
- 904: processing unit
- 905: input device
- 906: output device
- 907: bus
- 908: network interface
- 909: module
- 1000: CAD system
- 1002: CAD module
- 1004: controller
- 1006: robot

- DT1-N: downstream tasks
- FV: feature vector
- FL: feature vector
- FM: foundation model
- L: language encoder
- LA1-4: label
- LC: label
- LO1-7: loss
- MD: medical data
- MDB: medical database
- MI: medical image
- MIS-1: medical image data set
- MIS-2: medical image data set
- MIS-3: medical image data set
- MIS-4: medical image data set
- MR: medical report
- MRS-1: medical report data set
- MRS-2: medical report data set
- MRS-3: medical report data set
- MRS-4: medical report data set
- N1-7: downstream neural network
- TS1-4: training signal
- U: user
- V: vision encoder

- S400-464: method steps

## Claims

1. A method for training a first backbone neural network (V), comprising:
training (S400) the first backbone neural network (V) using a first medical data set (MIS-1) using self-supervised learning, the first medical data set (MIS-1) having a first modality;
training (S402) a first downstream neural network (N1) comprising:
applying (S402-2) the trained first backbone neural network (V) to a second medical data set (MIS-2) to provide a first feature vector (FV), the second medical data set (MIS-2) having the first modality;
training (S402-4) the first downstream neural network (N1) with the first feature vector (FV) as input data and labels (LA1) associated with the second medical data set (MIS-2); and
updating (S404) the trained first backbone neural network (V) based on a supervised training signal (TS 1) generated during the training of the first downstream neural network (N1).

2. The method according to claim 1, further including training a second downstream neural network (N2), comprising:
applying (S412-2) the trained first backbone neural network (V) to a third medical data set (MIS-3) to provide a second feature vector (FV), the third medical data set (MIS-3) having the first modality;
training (S412-4) the second downstream neural network (N2) with the second feature vector (FV) as input data and labels (LA2) associated with the third medical data set (MIS-3); and
updating (S414) the trained backbone neural network (V) based on a supervised training signal (TS2) generated during the training of the second downstream neural network (N2).

3. The method according to claim 1 or 2, further including training a second backbone neural network (L), comprising:
training (S420) the second backbone neural network (L) using a fourth medical data set (MRS-1) using self-supervised learning, the second medical data set (MRS-1) having a second modality;
training (S422) a third downstream neural network (N3) comprising:
applying (S422-2) the trained second backbone neural network (L) to a fifth medical data set (MRS-2) to provide a third feature vector (FL), the fifth medical data set (MRS-2) having the second modality;
training (S422-4) the third downstream neural network (N3) with the third feature vector (FL) as input data and labels (LA3) associated with the fifth medical data set (MRS-2); and
updating (S424) the trained second backbone neural network (L) based on a supervised training signal (TS3) generated during the training of the third downstream neural network (N3).

4. The method according to claim 3, wherein training the first and second backbone neural network (V, L) comprises:
applying (S430) the trained first backbone neural network (V) to a sixth medical data set (MIS-4) to output a fourth feature vector (FV);
applying (S430) the trained second backbone neural network (L) to a seventh medical data set (MRS-4) to output a fifth feature vector (FL);
comparing (S432) the fourth and fifth feature vector (FV, FL) to each other to provide a comparison result (LO5);
updating (S434) the first and second backbone neural network (V, L) depending on the comparison result (LO5).

5. The method according to claim 4, wherein comparing (S432) the fourth and fifth feature vector (FV, FL) comprises:
determining a difference (LO5) between the fourth and fifth feature vector (FV, FL);
and wherein further training the first and second backbone neural network (V, L) comprises:
minimizing the difference (LO5).

6. The method according to one of claims 1 - 5, further including a federated learning step, comprising:
training (S400') a third backbone neural network (V') using an eighth medical data set (MIS-1') using self-supervised learning, the eighth medical data set (MIS-1') having the first modality;
aggregating (S460) the trained first and third backbone neural network (V, V') to form an aggregated backbone neural network (V*); and
updating (S462, S462') the trained first and/or third backbone neural network (V, V') based on the aggregated backbone neural network (V*).

7. The method according to claim 6, the federated learning step further including prior to the step of aggregating (S460) the trained first and third backbone neural network (V, V'):
training (S402') a fourth downstream neural network (N1'), comprising:
applying (S402-2') the trained third backbone neural network (V') to a ninth medical data set (MIS-2') to provide a sixth feature vector (FV'), the ninth medical data set (MIS-2') having the first modality;
training (S402-4') the fourth downstream neural network (N1') with the sixth feature vector (FV') as input data and labels (LA1') associated with the ninth medical data set; and
updating (S404') the trained third backbone neural network (V') based on a supervised training signal (TS1') generated during training of the fourth downstream neural network (N1').

8. The method according to claim 6 or 7, further including:
determining (S450, S450') whether a data item is allowed to be used in the step of aggregating (S460) the trained first and third backbone neural network (V, V').

9. The method according to one of claims 1 - 8, wherein the trained first, second, third and/or fourth downstream neural network (N1-4) is configured to perform a downstream task (DT1-4) outputting one or more labels, the downstream task (DT1-4) preferably including at least one of the following: detection of findings, classification of findings, segmentation, e.g., of organs, finding prior image data, e.g., of the same patient, and trending analysis.

10. The method according to one of claims 1 - 9, wherein:
the first, second, third and/or fourth downstream neural network (N1-4) is embodied as a convolutional neural network;
the trained first, second and/or third backbone neural network (V, L, V') is based on an encoder and/or transformer model, in particular a natural language transformer model, and/or wherein the trained first, second and/or third backbone neural network (V, L, V') is a foundation model (FM).

11. The method according to one of claims 1 - 10, wherein:
the second modality is different from the first modality and/or wherein the first and second modality are images, text, audio or video;
wherein one or more of the first to ninth medical data sets (MIS-1...MRS-4) includes at least one medical finding; and/or
the at least one medical finding relates to an image feature, a text feature, an audio feature or a video feature.

12. A training system (800) comprising:
a first training device (802) having:
a first training unit (807) for training a first backbone neural network (V) using a first medical data set (MIS-1) using self-supervised learning, the first medical data set (MIS-1) having a first modality;
a second training unit (808) for applying the trained backbone neural network (V) to a second medical data set (MIS-2) to provide a first feature vector (FV), the second medical data set (MIS-2) having the first modality, and further for training a first downstream neural network (N1) downstream of the first backbone neural network (V) with the first feature vector (FV) as input data and labels (LA1) associated with the second medical data set (MIS-2); and
an update unit (809) for updating the trained first backbone neural network (V) based on a supervised training signal (TS1) generated during training of its first downstream neural network (N1);
a second training device (802') having:
a first training unit (807') for training a second backbone neural network (V') using a third medical data set (MIS-1') using self-supervised learning, the third medical data set (MIS-1') having the first modality;
a second training unit (808') for applying the trained second backbone neural network (V') to a fourth medical data set (MIS-2') to provide a second feature vector (FV'), the fourth medical data set (MIS-2') having the first modality, and further for training a first downstream neural network (N1') downstream of the second backbone neural network (V') with the second feature vector (FV') as input data and labels (LA1') associated with the fourth medical data set (MIS-2'); and
an update unit (809') for updating the trained second backbone neural network (V') based on a supervised training signal (TS2') generated during training of its first downstream neural network (N1');
an aggregator device (108) configured for aggregating the trained first and second backbone neural networks (V, V') to form an aggregated backbone neural network (V*), and further for updating the trained first and second backbone neural networks (V, V') based on the aggregated backbone neural network (V*).

13. A computer-implemented detection and/or diagnosis system (1000), comprising:
a receiving unit (904, 908) configured to receive medical data (MD), the medical data (MD) having a first modality;
a first storage unit (202) storing a first backbone neural network (V), the first backbone neural network (V) being trained as claimed in the method according to one of claims 1 - 11;
a first processing unit (904) configured for determining a feature vector (FV) based on the first backbone neural network (V) and the received medical data (MD);
a second storage unit (202) storing a first downstream neural network (N1), the first downstream neural network (N1) being trained as claimed in the method according to one of claims 1 - 11; and
a second processing unit (904) configured for determining a label (LC) based on the feature vector (FV) and the first downstream neural network (N1); and
an output unit (906) for outputting the determined label (LC).

14. The system of claim 13, further comprising a controller (1004) configured for generating control signals to control a robot (1006) based on the output label (LC).

15. A computer program product comprising machine readable instructions (909), that when executed by one or more processing units (904), cause the one or more processing units (904) to perform the method according to claims 1 to 11.
